# EUROPEAN PATENT APPLICATION

(11) **EP 1 853 057 A2**
(43) Date of publication of application: **07.11.2007**
(21) Application number: 07101248.8
(22) Date of filing: 26.01.2007
(51) Int. Cl.: H04N 5/00, H04N 7/24

(54) **Method for receiving MPE-FEC data and DVB-H receiver using same**

(30) Priority: 02.05.2006 KR 20060039665
(71) Applicant: Samsung Electronics Co., Ltd., Suwon-si, Gyeonggi-Do (KR)
(72) Inventor: Baek, Woo-Hyun, c/ Samsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

Disclosed are a method for receiving MPE-FEC data and a DVB-H receiver using the same. While receiving packet data for digital broadcasting from a DVB-H network, a digital broadcasting reception unit PID-demultiplexes and outputs the packet data to the controller. The controller receives and stores the PID-demultiplexed packet data in a memory according to the PIDs. Further, the controller checks the packet data stored in the memory according to the PIDs, and determines if MPE-FEC data included in the packet data are completely received. In the case where the MPE-FEC data are received, the controller applies the MPE-FEC data to the digital broadcasting reception unit. The digital broadcasting reception unit stores the MPE-FEC data in the MPE-FEC memory so as to RS-decode and output the MPE-FEC data to the controller. The controller processes the MPE-FEC data to multimedia data and outputs the multimedia data. Thus, the DVB-H receiver can receive a plurality of MPE-FEC data regardless of capacity of the MPE-FEC memory of the digital broadcasting reception unit. Further, the DVB-H can perform a rapid change of channel without additional cost for increasing of capacity of the MPE-FEC memory.

## Description

The present invention relates to a digital broadcast, and more particularly to a terminal for receiving Digital Video Broadcasting-Handheld (DVB-H).

Generally, DVB-H is based on Digital Video Broadcasting-Terrestrial (DVB-T). Taking into consideration the portability of broadcasting receiver, the DVB-H has been improved to operate at low power consumption levels. In order for the DVB-H to operate with at low power levels, the DVB-H receiver employs time slicing. Time slicing uses power only when a user receives packet data corresponding to a selected channel, interrupts the supply of power so as to save power before a next packet data is received.

A DVB-H network transmits Internet Protocol (IP) data to DVB-H receivers using Multi-Protocol Encapsulation (MPE). The broadcasting data, i.e. MPE data, transmitted to the DVB-H receivers can be sliced into a plurality of packets having an identical Packet Identification (PID). Further, in order to protect the MPE data, the DVB-H receivers use Reed-Solomon (RS) coding as Forward Error Correction (FEC).

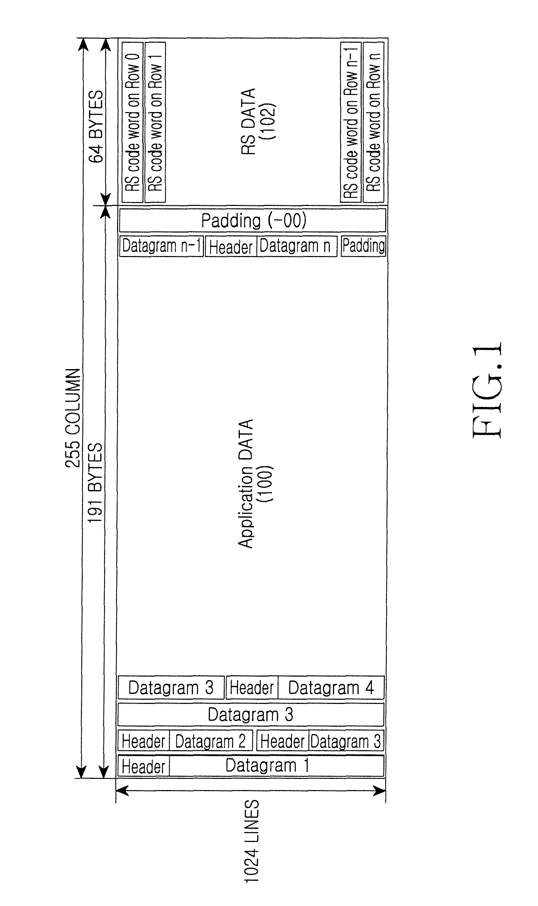

FIG. 1 is a diagram illustrating a configuration of data (hereinafter, referred to as MPE-FEC data) capsulated and transmitted by a MPE-FEC method used in the DVB-H. Referring to FIG. 1, MPE data, i.e. application data, may be typically loaded into a two-dimensional array having columns that relate to a certain burst unit. FEC can be calculated with respect to each row of the two-dimensional array of the application. RS data for the FEC is added to the application data as shown in FIG. 1.

The MPE-FEC data includes application data of1564672 bits with 1024 lines of 191 byte B-5 and the RS data of 524288 bit, with a total size of about 2Mb. When the reception of the MPE-FEC data must be completed, it is possible to detect and correct errors of the MPE-FEC data received using in FEC. A digital broadcast reception portion of the DVB-H receiver has to have a storage capacity of at least 2Mb so as to receive the MPE-FEC data of the PID corresponding to a channel, and to detect and correct errors in the data. The conventional DVB-H receivers include the MPE-FEC memory of at least 2Mb in a receiving circuit, i.e. digital broadcasting reception portion.

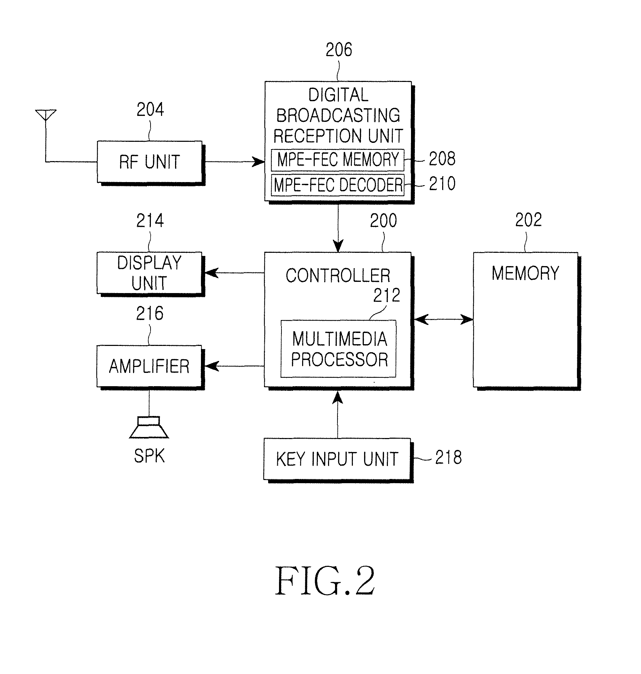

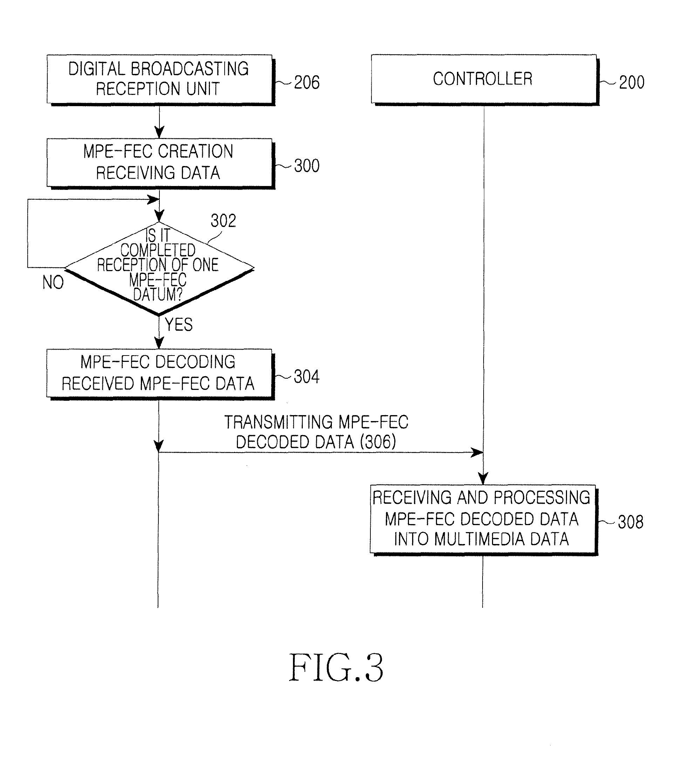

FIG. 2 is a block diagram illustrating a conventional DVB-H receiver. FIG. 3 is a flow chart illustrating an operation of MPE-FEC decoding the MPE-FEC data received in the conventional DVB-H receiver so as to output digital broadcast data.

Referring to FIGS. 2 and 3, the conventional DVB-H receiver includes MPE-FEC memory 208 and the MPE-FEC decoding unit 210 which are disposed on the digital broadcast reception portion 206, as described above. The digital broadcast reception portion 206 performs step 300 so as to receive data for generation of MPE-FEC, i.e. packet data having an identical PID. Further, the digital broadcast reception portion 206 stores the received packet data in the MPE-FEC memory 208.

The digital broadcast reception portion 206 proceeds to step 302 so as to check the packet data stored in the MPE-FEC memory 208 and if the reception of one MPE-FEC datum is completed. Next, where it is possible to generate one MPE-FEC data using the currently received packet data, resulting from the checking at step 302, the digital broadcast reception portion 206 determines that it is ready to receive the MPE-FEC data corresponding to the PID with which the packet data is commonly provided, and proceeds to step 304. Continuously, the digital broadcast reception portion 206 proceeds to step 306 so as to output to a controller 200 data which is MPE-FEC decoded at step 304. The controller 200 processes multimedia data of the MPE-FEC decoded data using the multimedia processor 212, and then outputs video signals and audio signals through an amplifier 216 and a display unit 214.

Thus, the conventional DVB-H receiver cannot receive MPE-FEC data to output the digital broadcasting data corresponding to another channel excluding one MPE-FEC data unless the capacity of the MPE-FEC memory 208 mounted in the digital reception portion 206 increases. This is because it is possible to identify if FEC is performed with respect to the received data so that the data has an error only when the reception of the MPE-FEC data is completed.

Generally, the DVB-H receives and outputs only data corresponding to the channel that a user selects, using time slicing as described above. If the user changes a channel, the DVB-H cannot be output while the MPE-FEC data corresponds to the changed channel. Thus, in order to increase the changing rate of the channels in the DVB-H, the packet data of other channels excluding the channel that a user selects turns on the digital broadcast reception portion 206 during the broadcasting so as to allow the digital reception portion 206 to receive and buffer the MPE-FEC data from other channels in advance. However, in order to receive one complete MPE-FEC data as described above, the storage capacity of at least 2Mb is required. Thus, there is a problem in that the capacity of the MPE-FEC memory 206 must increase if other MPE-FEC data is received and stored in order to increase the changing rate of the channel.

Accordingly, the present invention has been made to solve at least the above-mentioned problems occurring in the prior art. It is the object of the present invention to provide a method for receiving MPE-FEC data and a DVB-H receiver using the same, which can increase a changing rate of channel without increasing the capacity of an MPE-FEC in the DVB-H receiver.

This object is solved by the subject matter of the independent claims.

Preferred embodiments are defined in the dependent claims.

In order to accomplish the object of the present invention, according to an aspect of the present invention, there is provided a method for receiving and outputting Multi-Protocol Encapsulation Forward Error Correction (MPE-FEC) data from Digital Video Broadcasting-Handheld (DVB-H) network using DVB-H receiver, including receiving packet data for creating MPE-FEC data corresponding to a user selected channel and at least one channel adjacent to the user selected channel, in a digital broadcasting reception unit of the DVB-H receiver; demultiplexing and classifying the received packet data according to Packet Identification (PIDs) in the digital broadcasting reception unit, so as to output the classified packet data to the DVB-H receiver; receiving and storing the packet data according to the PIDs; checking the stored packet data to determine if MPE-FEC data corresponding to the channel can be created; applying the packet data corresponding to the MPE-FEC data to the digital broadcasting reception unit, if the MPE-FEC data corresponding to the user selected channel can be created; creating and MPE-FEC decoding the MPE-FEC data using the applied packet data in the digital broadcasting reception unit, so as to output the decoded MPE-FEC data to the controller; and receiving and processing the decoded MPE-FEC data as multimedia data in the controller.

In order to accomplish the aspects of the present invention, according to another aspect of the present invention, there is provided a (DVB-H) receiver, including:
a digital broadcasting reception unit for demultiplexing and classifying received packet data according to Packet Identification (PIDs), outputting the classified packet data, creating Multi-Protocol Encapsulation Forward Error Correction (MPE-FEC) data of a selected channel using the packet data when the packet data is received in order to create the MPE-FEC data of the selected channel, and MPE-FEC decoding and outputting the MPE-FEC data; a memory for classifying and storing the packet data according to the PIDs; and a controller for storing the packet data in the memory according to the PIDs when the packet data is input from the digital broadcasting reception unit, checking the stored packet data so as to determine if it is possible to create MPE-FEC data corresponding to the selected data, outputting the corresponding packet data to the digital broadcasting reception unit if it is possible to create the MPE-FEC data corresponding to the selected channel, and processing the decoded MPE-FEC data as multimedia data so as to output the multimedia data.

The above and other aspects, features, and advantages of the present invention will be more apparent from the following detailed description taken in conjunction with the accompanying drawings, in which:
FIG. 1 is a diagram illustrating a configuration of conventional MPE-FEC capsulated data;
FIG. 2 is a block diagram illustrating a conventional DVB-H receiver;
FIG. 3 is a flow chart illustrating an operation of MPE-FEC decoding the MPE-FEC capsulated data in the conventional DVB-H receiver;
FIG. 4 is a block diagram illustrating a configuration of a DVB-H receiver according to the present invention; and
FIG. 5 is a flow chart illustrating an operation of MPE-FEC decoding the MPE-FEC capsulated data in the DVB-H receiver according to the present invention.

Hereinafter, preferred embodiments of the present invention will be described with reference to the accompanying drawings. The same reference numerals denote the same structural elements throughout the accompanying drawings. In the following description of the present invention, a detailed description of known functions and configurations incorporated herein is omitted to avoid making the subject matter of the present invention unclear.

In a DVB-H receiver according to the present invention, a digital broadcast reception unit receives and PID-demultiplexes packet data for a digital broadcast from a DVB-H network so as to output the demultiplexed packet data to a controller. The controller receives and stores the PID-demultiplexed packet data according to PIDs. The controller checks the packet data stored in the memory according to the PIDs, and determines if the reception of the MPE-FEC data of the PID with the packet data is completed. In the case where all of the MPE-FEC data has been received, the controller transmits the MPE-FEC data to the digital broadcast receiver again. The digital broadcast receiver stores and RS-decodes the MPE-FEC data in the memory so as to output the decoded MPE-FEC data to the controller again. The controller processes the decoded MPE-FEC data to multimedia MPE-FEC data so as to output it. According to the present invention, it is possible to receive a plurality of MPE-FEC data regardless of the capacity of the MPE-FEC memory of the digital broadcast receiver. Thus, the present invention can change the channel rapidly although there is no additional cost of increasing the capacity of the MPE-FEC memory.

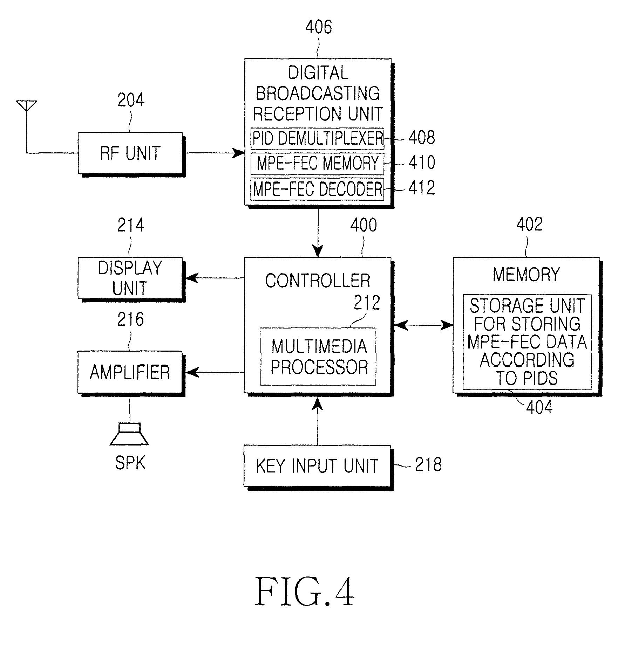

FIG. 4 is a block diagram illustrating a configuration of a DVB-H receiver according to the present invention.

Referring to FIG. 4, the DVB-H receiver includes a controller 400, and a Radio Frequency (RF) unit 204, a memory 402, a key input unit 218, a display unit 214, a digital broadcast receiver 406, and an amplifier 114.The controller 400 processes audio signals, video signals and data according to a protocol for DVB-H broadcasting, and controls all units connected thereto.

Further, the controller 400 receives the packet data, which is consistent with the MPE-FEC data corresponding to the channel that a user selects and the other channels adjacent to the selected channel, through the digital broadcasting receiver 406 and a connected fast interface from the digital broadcasting receiver 406. The fast interface may include for example a Universal Serial Bus (USB), a Mega Universal Asynchronous Receiver Transmitter (UART), or a Serial Peripheral Interface (SPI), etc.

The packet data can be multiplexed and classified by each PID by means of the digital broadcasting receiver 406. The controller 400 receives and stores the classified packet data in the memory 402 according to the PIDs. Then, the controller checks the packet data stored according to the PIDs so as to determine if the reception of the MPE-FEC data corresponding to the current channel that the user selects is completed.

When the reception is completed, the controller 400 reads the MPE-FEC data of the channel, which the user selects, from the memory 402 and transmits the MPE-FEC data to the digital broadcasting receiver 406 so as to allow the digital broadcasting receiver 406 to perform MPE-FEC decoding of the corresponding MPE-FEC data. The controller 400 receives the decoded MPE-FEC data from the digital broadcasting receiver 406, which in turn transmits the data to the multimedia processor 212 so as to allow the multimedia processor 212 to process the data into the multimedia data. The controller 400 outputs video and audio data resulting from the multimedia processing through the display unit and the amplifier, and thereby outputs the DVB-H of the channel that the user selects. Accordingly, if the user changes the channel, the DVB-H receiver instantly reads the MPE-FEC data corresponding to the channel from the memory 402 and transmits the data to the digital broadcasting reception unit 406 so that the digital broadcasting reception unit 406 performs the MPE-FEC decoding. As a result, the digital broadcasting receiver according to the present invention can rapidly change the channel without increasing of the capacity of the MPE-FEC memory 410 of the digital broadcasting reception unit 406.

The memory 402 connected to the controller 400 includes a region in which the received packet data is stored according to the PIDs. The region in which the packet data is stored according to the PIDs is referred to as PID MPE-FEC data storage unit 404. The memory 402 includes Read Only Memory (ROM), Flash memory, and Random Access Memory (RAM), etc. Among these memories, the ROM stores various data and programs for the processing and controlling of the controller 400. The RAM supplies the controller 400 with a working memory, and the Flash memory supplies a region for storing various updatable data.

The RF unit 204 receives digital multimedia broadcasting signals, i.e. packet data, from the DVB-H network. The digital broadcasting reception unit 406 includes an MPE-FEC memory 410, an MPE-FEC decoder 412, and a PID demultiplexer 408. The digital broadcasting reception unit 406 receives the packet data from the RF unit 204, and classifies the packet data according to the PIDs using the PID demultiplexer 408. Further, the digital broadcasting reception unit 406 outputs to the controller 400 the packet data classified according to the PIDs.

When the packet data for generating the MPE-FEC data of a certain channel is received from the controller 400, the digital broadcasting reception unit 406 stores the packet data in the MPE-FEC memory 410. The digital broadcasting reception unit 406 creates the MPE-FEC data using the packet data stored in the MPE-FEC memory 410 through an MPE-FEC decoder 412, and performs MPE-FEC decoding so as to detect and correct errors in the MPE-FEC data. Then, when the detection and correction of errors in the MPE-FEC data is complete, the digital broadcasting reception unit 406 outputs the MPE-FEC data, in which the detection and correction of errors are completed, to the controller 400.

The key input unit 218 is provided with various keys including numeral keys as described above, and provides key inputs from the user to the controller 400. The display unit 214 outputs video data supplied from the controller 400 as image information. The amplifier 216 amplifies audio data supplied from the controller 400, according to the gain control of the controller 400, and outputs the audio data through a speaker unit connected thereto.

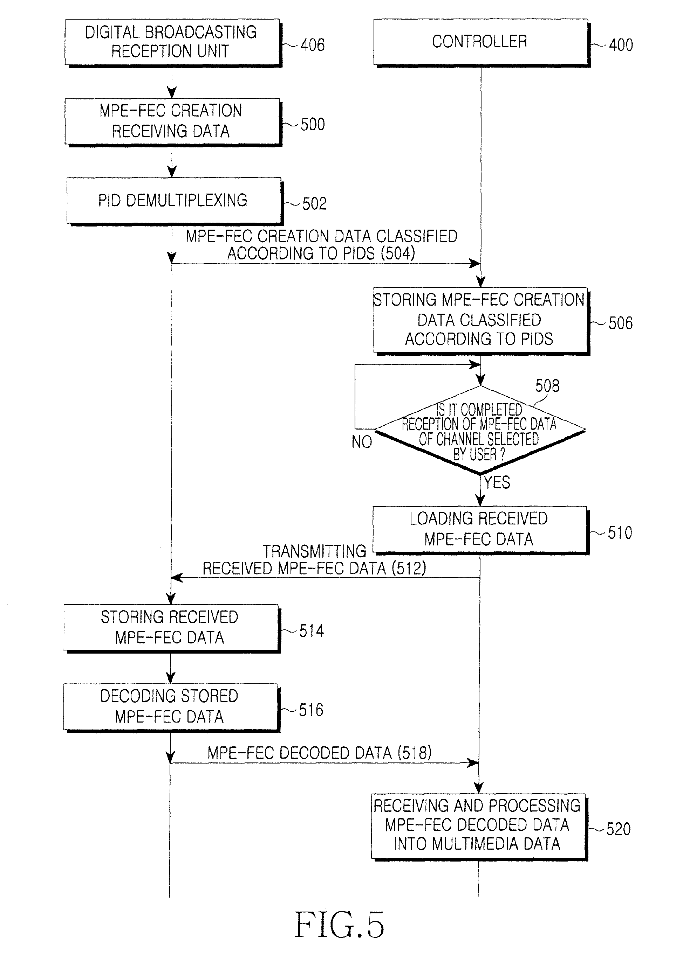

FIG. 5 is a flow chart illustrating an operation of MPE-FEC decoding the MPE-FEC capsulated data in the DVB-H receiver according to the embodiment of the present invention.

Referring to FIG. 5, the digital broadcasting reception unit 406 of the DVB-H receiver proceeds to step 500, and receives the packet data for creating the MPE-FEC data of the channel which the user selects, and the other preset channels adjacent to the selected channel. Then, the digital broadcasting reception unit 406 proceeds to step 502, and demultiplexes the PID of the received packet data so as to classify the packet data according to the PIDs. The digital broadcasting reception unit 406 proceeds to step 504, and outputs the packet data classified according to the PIDs to the controller 400.

The controller 400 proceeds to step 506, and stores the packet data input from the digital broadcasting reception unit 406 in the MPE-FEC data storage unit 404 of the memory 402 according to the PIDs. Then, the controller 400 proceeds to step 508, and checks the packet data stored in the PID MPE-FEC data storage unit 404 according to the PIDs so as to check if it is possible to create the MPE-FEC data corresponding to the current channel which the user selects. In the case where the MPE-FEC data corresponding to the currently selected channel have been created, the controller 400 determines that the reception of the MPE-FEC data is completed according to the user's current selection, and proceeds to step 510 so as to load the packet data corresponding to the MPE-FEC data, i.e. the received MPE-FEC data, into the memory 402. Next, the controller 400 proceeds to step 512, and outputs the received MPE-FEC data to the digital broadcasting reception unit 406.

On the other hand, in the case where the received MPE-FEC data is input from the controller 400, the digital broadcasting reception unit 406 proceeds to step 514 in order to receive and store the received MPE-FEC data in the MPE-FEC memory 410 so as to create the MPE-FEC data. The digital broadcasting reception unit 406 proceeds to step 516, and performs the MPE-FEC decoding of the MPE-FEC data so as to check if errors occurs in the received MPE-FEC data. If there are errors in the received MPE-FEC data, the digital broadcasting reception unit 406 corrects the errors using FEC method. Next, the digital broadcasting reception unit 406 proceeds to step 518, and outputs the MPE-FEC data, in which the errors are completely detected and corrected, to the controller 400 again. Then, the controller 400 proceeds to step 520, and receives the MPE-FEC data in which the MPE-FEC decoding is completed, so as to process the MPE-FEC data in the form of the multimedia data through the multimedia processor 212. Continuously, the controller 400 outputs video and audio data resulting from the multimedia processing through the display unit and amplifier.

Thus, according to the present invention, it is possible to receive and store the MPE-FEC data of the other channels as well as the MPE-FEC data of the channel which the user selects, without increasing the capacity of the MPE-FEC memory 410 of the digital broadcasting reception unit 406. The DVB-H can output the digital broadcasting according to the channel that the user selects without a lapse in time for receiving the MPE-FEC data corresponding to the channel which the user changes.

Accordingly, the present invention has an advantage of increasing the changing rate of the channel without increasing of the capacity of the MPE-FEC memory in the DVB-H receiver.

Although the present invention has been described with reference to only the DVB-H, it will be understood that the present invention can be applied to the digital broadcasting, for example DVB-T, having similar structure to the DVB-H, which can receive the digital broadcasting signals using the time slicing and uses encapsulation method similar to the MPE-FEC.

While the invention has been shown and described with reference to certain preferred embodiments thereof, it will be understood by those skilled in the art that various changes in form and details may be made therein without departing from the scope of the invention as defined by the appended claims.

## Claims

1. A method for receiving and outputting Multi-Protocol Encapsulation Forward Error Correction, MPE-FEC, data from digital video broadcasting-handheld network using digital video broadcasting-handheld receiver, comprising the steps of:
receiving packet data for creating MPE-FEC data corresponding to a user selected channel and at least one channel adjacent to the user selected channel, in a digital broadcasting reception unit of the digital video broadcasting-handheld receiver;
demultiplexing and classifying the received packet data according to packet identifications in the digital broadcasting reception unit, so as to output the classified packet data to the digital video broadcasting-handheld receiver;
receiving and storing the packet data according to the packet identifications ;
checking the stored packet data to determine if MPE-FEC data corresponding to the channel can be created;
applying the packet data corresponding to the MPE-FEC data to the digital broadcasting reception unit, if the MPE-FEC data corresponding to the user selected channel can be created;
creating and MPE-FEC decoding the MPE-FEC data using the applied packet data in the digital broadcasting reception unit, so as to output the decoded MPE-FEC data to the controller; and
receiving and processing the decoded MPE-FEC data as multimedia data in the controller.

2. The method as claimed in claim 1, wherein the digital broadcasting reception unit receives packet data for creating MPE-FEC data according to a plurality of channels.

3. The method as claimed in claim 1 or 2, wherein the controller and the digital broadcasting reception unit exchange the packet data and the MPE-FEC data through a fast interface.

4. The method as claimed in claim 3, wherein the fast interface is one of USB, a Mega Universal Asynchronous Receiver Transmitter, UART, and a Serial Peripheral Interface, SPI.

5. A digital video broadcasting-handheld receiver, comprising:
a digital broadcasting reception unit for demultiplexing and classifying received packet data according to packet identifications, outputting the classified packet data, creating Multi-Protocol Encapsulation Forward Error Correction, MPE-FEC, data of a selected channel using the packet data when the packet data is received in order to create the MPE-FEC data of the selected channel , and MPE-FEC decoding and outputting the MPE-FEC data;
a memory for classifying and storing the packet data according to the packet identifications; and
a controller for storing the packet data in the memory according to the packet identifications when the packet data is input from the digital broadcasting reception unit, checking the stored packet data so as to determine if it is possible to create MPE-FEC data corresponding to the selected data, outputting the corresponding packet data to the digital broadcasting reception unit if it is possible to create the MPE-FEC data corresponding to the selected channel, and processing the decoded MPE-FEC data as multimedia data so as to output the multimedia data.

6. The digital video broadcasting-handheld receiver as claimed in claim 5, wherein the digital broadcasting reception unit includes:
a packet identification demultiplexer for demultiplexing and classifying the received packet data according to the packet identifications;
an MPE-FEC memory for storing the packet data received from the controller in order to create MPE-FEC data corresponding to the selected channel; and
an MPE-FEC decoder for creating and MPE-FEC decoding the MPE-FEC data using the packet data stored in the MPE-FEC memory.

7. The digital video broadcasting-handheld receiver as claimed in claim 5 or 6, further comprising a fast interface for connecting the digital broadcasting reception unit to the controller so as to fast exchange the packet data and the MPE-FEC data.

8. The digital video broadcasting-handheld receiver as claimed in claim 7, wherein the fast interface is one of USB, a Mega Universal Asynchronous Receiver Transmitter, UART, and a Serial Peripheral Interface, SPI.
